# EUROPÄISCHE PATENTSCHRIFT

(11) **EP 1 690 021 B1**
(45) Veröffentlichungstag und Bekanntmachung des Hinweises auf die Patenterteilung: **20.01.2010**
(21) Anmeldenummer: 04816325.7
(22) Anmeldetag: 01.11.2004
(51) Int. Cl.: F16F 9/04

(54) **VERFAHREN UND VORRICHTUNG ZUR HERSTELLUNG EINER ROLLBALGLUFTFEDER UND ROLLBALGLUFTFEDER MIT EINER BÖRDELPLATTE**
METHOD AND DEVICE FOR PRODUCING A U-BELLOWS-TYPE PNEUMATIC SPRING AND U-BELLOWS-TYPE PNEUMATIC SPRING HAVING A FLANGED PLATE
PROCEDE ET DISPOSITIF DE PRODUCTION D'UN SOUFFLET TUBULAIRE AMORTISSEUR PNEUMATIQUE ET SOUFFLET TUBULAIRE AMORTISSEUR PNEUMATIQUE POURVU D'UNE PLAQUE DE SERTISSAGE

(30) Priorität: 27.11.2003 DE 10355441
(43) Veröffentlichungstag der Anmeldung: 16.08.2006
(73) Patentinhaber: ContiTech Luftfedersysteme GmbH, 30165 Hannover (DE)
(72) Erfinder: MORIG, Gerd, 30926 Seelze (DE); GNIRK, Wolfgang, 31275 Lehrte (DE); REICH, Bernd, 31535 Neustadt (DE)
(74) Vertreter: Finger, Karsten
(86) Internationale Anmeldenummer: PCT/EP2004/052744
(87) Internationale Veröffentlichungsnummer: WO 2005/052405

(56) Entgegenhaltungen:
- EP-A- 0 573 846
- WO-A-01/27905
- DE-A1- 4 423 885
- US-A- 2 874 458

## Beschreibung

Die Erfindung betrifft ein Verfahren zur Herstellung einer Rollbalgluftfeder mit einem Rollbalg und einer Bördelplatte mit einer Zarge und einem Boden, bei dem die Bördelplatte in ein unteres Werkzeug eingelegt wird, ein oberes Bördelwerkzeug die Bördelplatte in das untere Bördelwerkzeug presst, wobei die Zarge der Bördelplatte in eine Thorusform umgeformt wird und die Zarge der Bördelplatte dabei einen Wulst des Rollbalges sukzessive umfasst,
eine Vorrichtung mit einem oberen und einem unteren Bördelwerkzeug zur Durchführung des Verfahrens zur Herstellung einer Rollbalgluftfeder,
eine Bördelplatte mit einer Zarge und einem Boden für eine Rollbalgluftfeder und
eine Rollbalgluftfeder mit einem Rollbalg und einer Bördelplatte.

Luftfedern, wie sie im Fahrzeugbau zur Abfederung von Radaufhängungen Verwendung finden, bestehen im Wesentlichen aus einem Rollbalg (Luftfederbalg), der endseitig einerseits von einer Abdeckplatte und andererseits von einem Abrollkolben begrenzt ist und so in seinem Innenraum ein Luftfedervolumen umschließt. Der Rollbalg selbst besteht aus Gummi oder gummiähnlichem Kunststoff mit endseitigen Befestigungswülsten. Das an der Abdeckplatte befindliche Rollbalg-Ende ist üblicherweise durch Bördeln befestigbar, weshalb die obere Abdeckplatte auch "Bördelplatte" genannt wird. Eine derartige Luftfeder ist beispielsweise in der WO-A-01/27905 offenbart.

Die Bördelplatte weist dabei einen im Wesentlichen ebenenen Boden und eine senkrecht zum Boden angeordnete, kreisringförmige Zarge auf, wobei der Übergang vom Boden zur Zarge der Bördelplatte mit einem konvexen Bogen versehen ist, dessen Radius deutlich kleiner ist als die senkrechte Ausdehnung der Zarge.

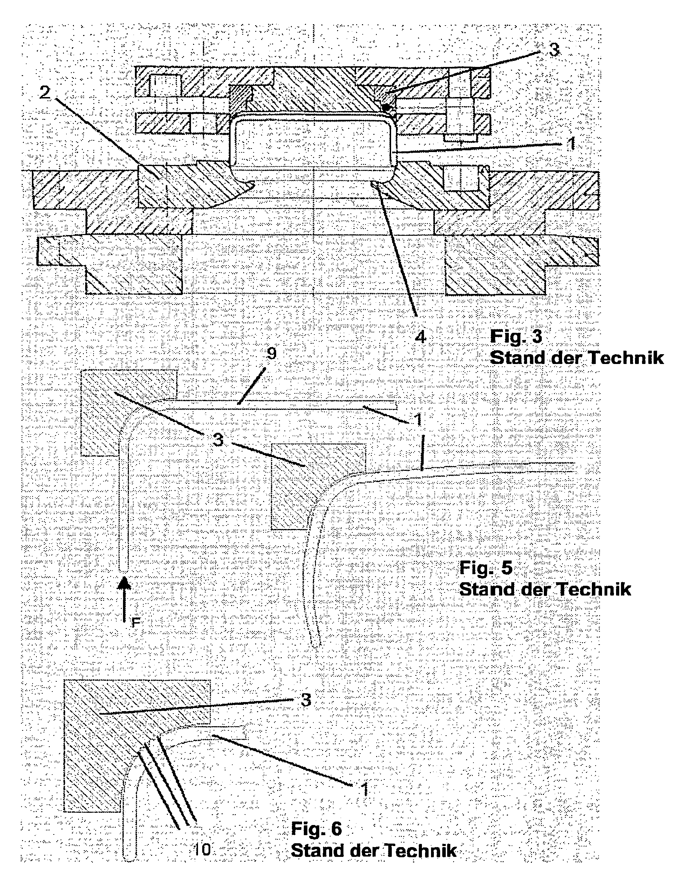

Der Bördelvorgang selbst entspricht dem in der Umformtechnik bekannten Gesenkbördeln. Die Bördelplatte befindet sich dabei mit ihrer Öffnung nach unten in einem ringförmig geschlossenen, nach oben offenen unteren Bördelwerkzeug, wobei der untere Teil des unteren Bördelwerkzeuges einen nasenförmig vorstehenden Ringansatz aufweist, dessen Durchmesser kleiner ist, als der Durchmesser der Zarge der Bördelplatte. In Fig. 3 ist ein Bördelwerkzeug schematisch dargestellt, wobei die Bördelplatte mit 1, das untere Bördelwerkzeug mit 2, das obere Bördelwerkzeug mit 3 und der nasenförmige Ringansatz mit 4 bezeichnet ist.

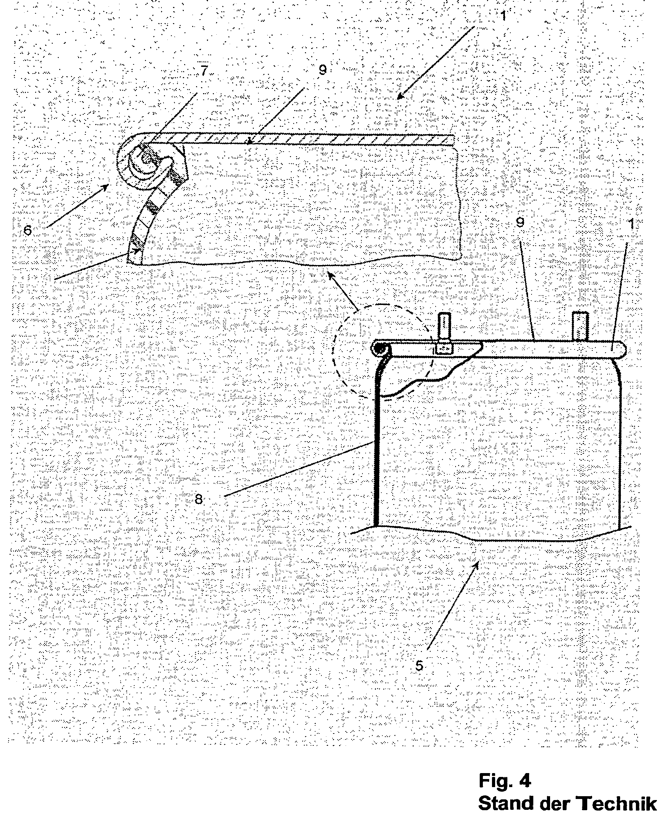

Die Bördelplatte wird beim Bördeln mit dem oberen Bördelwerkzeug von oben nach unten in das untere Bördelwerkzeug hineingepresst, wobei die untere Kante der Zarge der Bördelplatte durch den nasenförmigen Ringansatz des unteren Bördelwerkzeuges nach innen umgeformt wird. Die Zarge nimmt dabei die Form eines Thorus an, der den oberen endseitigen Befestigungswulst eines Gummi-Rollbalges umfasst und so eine dichte und feste Verbindung zwischen dem Rollbalg und der Bördelplatte herstellt. Fig. 4 zeigt anhand eines Ausschnittes einer fertig gebördelten Rollbalgluftfeder 5 das Ergebnis eines solchen Bördelvorganges. Die Zarge 6 der Bördelplatte 1 ist thorusförmig um den Wulst 7 eines Rollbalges 8 herumgeformt. Der Boden 9 der Bördelplatte 1 ist eben.

Durch den beim Pressen auf die Zarge der Bördelplatte ausgeübten Druck wird die Zarge in Richtung auf den Boden zurückgestaucht. Dieser Vorgang ist in Fig. 5 dargestellt. Die Bördelplatte 1 wird durch die Kraft F gegen das obere Bördelwerkzeug 3 gedrückt. Dadurch entsteht ein Materialfluss in den Boden 9 der Bördelplatte 1, der dazu führt, dass sich der Boden 9 der Bördelplatte 1 konkav oder konvex ausbeult und damit die Bördelplatte 1 unbrauchbar macht. Um dies zu vermeiden, ist gem. Fig. 6 das obere Bördelwerkzeug 3 mit scharfen Halterillen 10 ausgerüstet, die sich bei Beginn des Pressens in die Oberfläche der Bördelplatte 1 eingraben und so den nachteiligen Materialfluss verhindern. Das Bördelwerkzeug aus der WO-A-01/27905 weist dazu eine scharfe Außenkante auf, deren Durchmesser kleiner ist als der Durchmesser der Bördelplatte. Dabei wird jedoch die Oberfläche der Bördelplatte 1 beschädigt, was sich nachteilig auf eine Korrosionsschutzschicht der Bördelplatte 1 auswirkt, da diese Schicht durch die Halterillen 10 durchdrungen wird. Eine organische Korrosionsschutzschicht wird dadurch an dieser Stelle vollständig unwirksam und kann daher nicht eingesetzt werden.

Der Erfindung liegt die Aufgabe zugrunde, ein Verfahren zur Herstellung einer Rollbalgluflfeder zu schaffen, bei dem die Bördelplatte ohne wesentliche Änderungen an dem eingangs beschriebenen Bördelwerkzeug ohne Beschädigungen der Oberfläche der Bördelplatte mit ebenem Boden fest an den Rollbalg gebördelt wird.

Diese Aufgabe wird dadurch gelöst, dass
- an die Bördelplatte mindestens eine ringförmige, geschlossene, konkave, kreisbogenförmig abgerundete Haltesicke mit einer Tiefe kleiner als die Dicke der Bördelplatte angeformt wird, die auf der der Öffnung der Bördelplatte abgewandten Außenseite im Bereich des die Zarge mit dem Boden verbindenden konvexen Bogens in einem vollen Umlauf um den gesamten Umfang der Bördelplatte angeordnet wird,
- die Bördelplatte anschließend mit einer Korrosionsschutzschicht beschichtet wird,
- an dem oberen Bördelwerkzeug mindestens eine mit der mindestens einen konkaven Haltesicke der Bördelplatte korrespondierende kreisbogenförmig abgerundete konvexe Halterille angebracht wird,
- beim Bördelvorgang durch Niederpressen der Bördelplatte durch das obere Bördelwerkzeuges die mindestens eine konkave Haltesicke der Bördelplatte mit der mindestens einen konvexen Halterille des oberen Bördelwerkzeuges in Eingriff gebracht wird und
- die Zarge der Bördelplatte formschlüssig in die Thorusform umgeformt wird.

Dieses Verfahren hat den Vorteil, dass durch den Eingriff von Haltesicke und Halterille ein Materialfluss von der Zarge in den Boden der Bördelplatte formschlüssig verhindert wird, ohne dass die Oberfläche der Bördelplatte beschädigt wird.

Der Erfindung liegt weiterhin die Aufgabe zugrunde, eine Vorrichtung zur Durchführung des erfindungsgemäßen Verfahrens zur Herstellung einer Rollbalgluftfeder zu schaffen, die ein beschädigungsfreies Bördeln der Bördelplatte mit ebenem Boden ermöglicht.

Diese Aufgabe wird dadurch gelöst, dass das obere Bördelwerkzeug mindestens eine mit der mindestens einen konkaven Haltesicke der Bördelplatte korrespondierende kreisbogenförmig abgerundete konvexe Halterille aufweist, die beim Bördelvorgang durch Niederpressen der Bördelplatte durch das obere Bördelwerkzeuges mit der mindestens einen konkaven Haltesicke der Bördelplatte in Eingriff bringbar ist.

Diese Vorrichtung hat den Vorteil, dass die weiche, ohne scharfe Kante ausgeführte Halterille nicht durch die Oberfläche der Bördelplatte dringt, sondern in die korrespondierende Haltesicke der Bördelplatte eingreift und dadurch formschlüssig gegen einen Materialfluß zwischen Zarge und Boden der Bördelplatte wirkt. Damit ist eine Beschädigung der Oberflächenschichten der Bördelplatte verhinderbar.

In einer Weiterbildung der Erfindung weist der Querschnitt der mindestens einen ringförmigen konvexen Halterille des oberen Bördelwerkzeuges einen kreisbogenförmigen Querschnitt mit einem Radius des Kreisbogens zwischen 2mm und 30mm auf.

Diese erfindungsgemäße Vorrichtung hat den Vorteil, dass die Bördelplatte leicht im oberen Bördelwerkzeug zentrierbar ist, da sich durch die Kreisbogenform leichte Abweichungen von der ideal ebenen Einlegeposition der Bördelplatte in das untere Bördelwerkzeug von selbst ausgleichen.

In einer weiteren Ausbildung der Erfindung ist die konvexe Halterille des oberen Bördelwerkzeuges unter einem Winkel zwischen 15° und 85° zur Waagerechten angeordnet.

Diese Anordnung hat den Vorteil, dass die Verhinderung des Materialflusses von der Zarge zum Boden den geometrischen Verhältnissen und dem Werkstoffverhalten der Bördelplatte in einem weiten Bereich erreichbar ist.

Der Erfindung liegt weiterhin die Aufgabe zugrunde, eine Bördelplatte mit einer Zarge und einem Boden für eine Rollbalgluftfeder zu schaffen, die ohne wesentliche Änderungen an dem eingangs beschriebenen Bördelwerkzeug ohne Beschädigung ihrer Oberfläche mit ebenem Boden bördelbar ist.

Diese Aufgabe wird erfingdungsgemäß dadurch gelöst, dass die Bördelplatte mindestens eine vor dem Aufbringen einer Korrosionsschutzschicht und vor dem Bördeln angeformte ringförmige, geschlossene, konkave Haltesicke mit einer Tiefe kleiner als die Dicke der Bördelplatte aufweist, die auf der der Öffnung der Bördelplatte abgewandten Außenseite im Bereich des die Zarge mit dem Boden verbindenden konvexen Bogens in einem vollen Umlauf um den gesamten Umfang der Bördelplatte angeordnet ist.

Diese erfindungsgemäße Bördelplatte hat den Vorteil, dass bei eingelegter Bördelplatte die kreisbogenförmig abgerundet ausgeführten, mit den Haltesicken korrespondierende Halterillen im oberen Bördelwerkzeug mit den Haltesicken der Bördelplatte ohne Beschädigung der Oberfläche der Bördelplatte in Eingriff bringbar sind, und dadurch ein Materialfluss von der Zarge in den Boden der Bördelplatte formschlüssig verhinderbar ist.

In einer Weiterbildung der Erfindung weist der Querschnitt der mindestens einen ringförmigen konkaven Haltesicke einen kreisbogenförmigen Querschnitt auf, wobei der Radius des Kreisbogens zwischen 2mm und 30mm liegt.

Diese Ausführung hat den Vorteil, dass die Bördelplatte leicht im oberen Bördelwerkzeug zentrierbar ist, da sich durch die Kreisbogenform leichte Abweichungen von der ideal ebenen Einlegeposition der Bördelplatte in das untere Bördelwerkzeug von selbst ausgleichen.

In einer weiteren Ausbildung der Erfindung ist die konkave Haltesicke im Bereich des Bogens unter einem Winkel zwischen 15° und 85° zum ebenen Boden der Bördelplatte angeordnet.

Dies hat den Vorteil, dass die Verhinderung des Materialflusses von der Zarge zum Boden den geometrischen Verhältnissen und dem Werkstoffverhalten der Bördelplatte in einem weiten Bereich erreichbar ist.

Der Erfindung liegt weiterhin die Aufgabe zugrunde, eine Rollbalgluftfeder zu schaffen, deren Bördelplatte nach dem Bördeln an den Rollbalg einen ebenen Boden ohne Beschädigungen an der Oberfläche im Bereich des Eingriffes zwischen oberem Bördelwerkzeug und Bördelplatte aufweist.

Diese Aufgabe wird dadurch gelöst, dass die Rollbalgluftfeder eine Bördelplatte nach Anspruch 5 aufweist.

In einer Weiterbildung der Erfindung weist die konkave Haltesicke der Bördelplatte der Rollbalgluftfeder einen kreisbogenförmigen Querschnitt mit einem Radius des Kreisbogens zwischen 2mm und 30mm auf.

Diese Ausführung hat den Vorteil, dass die Bördelplatte leicht im oberen Bördelwerkzeug zentrierbar ist, da sich durch die Kreisbogenform leichte Abweichungen von der ideal ebenen Einlegeposition der Bördelplatte in das untere Bördelwerkzeug von selbst ausgleichen. Dadurch wird die Gleichmäßigkeit der Umfassung des Wulstes des Rollbalges der Rollbalgluftfeder verbessert.

In einer weiteren Ausbildung der Erfindung ist die konkave Haltesicke im Bereich des Bogens unter einem Winkel zwischen 15° und 85° zum ebenen Boden der Bördelplatte angeordnet.

Dies hat den Vorteil, dass die Verhinderung des Materialflusses von der Zarge zum Boden den geometrischen Verhältnissen und dem Werkstoffverhalten der Bördelplatte in einem weiten Bereich erreichbar ist.

Durch die erfindungsgemäße Lösung weist die Rollbalgluftfeder durch Bördelung der Bördelplatte ohne große Belastung der Oberfläche bei gleichzeitiger Verhinderung des Materialflusses zwischen Zarge und Boden der Bördelplatte einen ebenen Boden auf, wobei der Korrosionsschutz erhalten bleibt. Damit sind auch Rollbalgluftfedern mit organisch beschichteten Bördelplatten ohne Beschädigung der organischen Schutzschicht möglich.

Anhand der Zeichnung wird nachstehend ein Ausführungsbeispiel der Erfindung näher erläutert.

Es zeigt
- Fig. 1: eine erfindungsgemäße Bördelplatte mit Haltesicke,
- Fig. 2: das Zusammenwirken von Haltesicke und oberem Bördelwerkzeug
- Fig. 3: ein Bördelwerkzeug nach dem Stand der Technik,
- Fig. 4: eine fertig gebördelte Rollbalgluftfeder nach dem Stand der Technik
- Fig. 5: das Durchbiegen des Bördelplattenbodens nach dem Stand der Technik,
- Fig. 6: scharfe Halterillen eines oberen Bördelwerkzeuges nach dem Stand der Technik

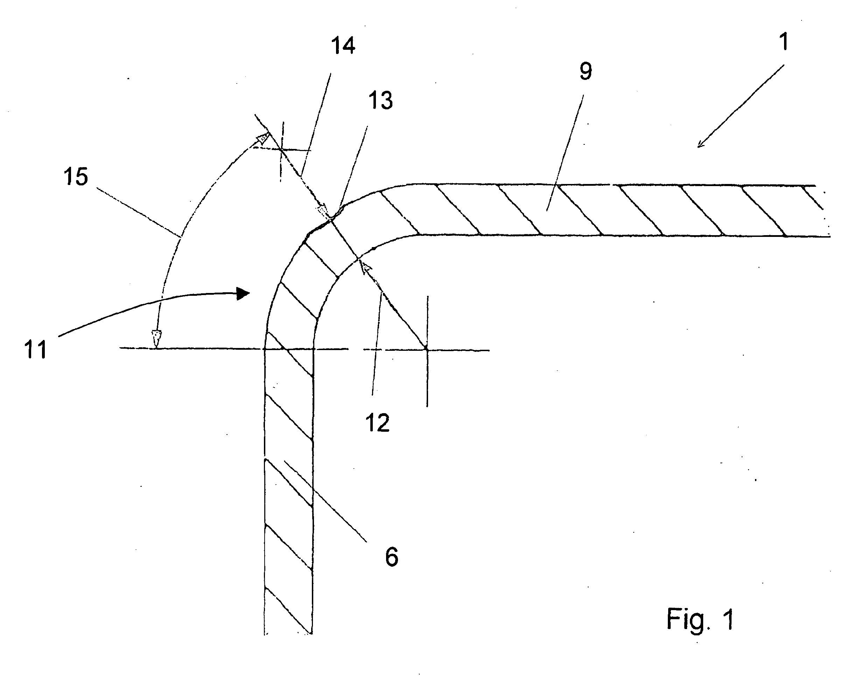

Fig. 1 zeigt einen Teil einer erfindungsgemäßen Bördelplatte 1 im Querschnitt. Die Bördelplatte weist einen Boden 9 und eine Zarge 6 auf, die über einen konvexen Bogen 11 mit einem Radius 12 ineinander übergehen. Im Bereich des konvexen Bogens 11 weist die Bördelplatte 1 eine konkave Haltesicke 13 mit einem Radius 14 auf, die durch den Herstellprozess der Bördelplatte 1 herstellbar ist. Der Radius 141 der Haltesicke 13 liegt in der gleichen Größenordnung wie der Radius 12 des Bogens 11. Die Haltesicke 13 ist unter einem Positionswinkel 15 im Bereich des Bogens 11 angeordnet und steht zur Vermeidung eines Materialflusses von der Zarge 6 über den Bogen 11 in den Boden 9 mit einem hier nicht gezeigten werkzeugseitigen Haltewulst in formschlüssiger Wirkverbindung.

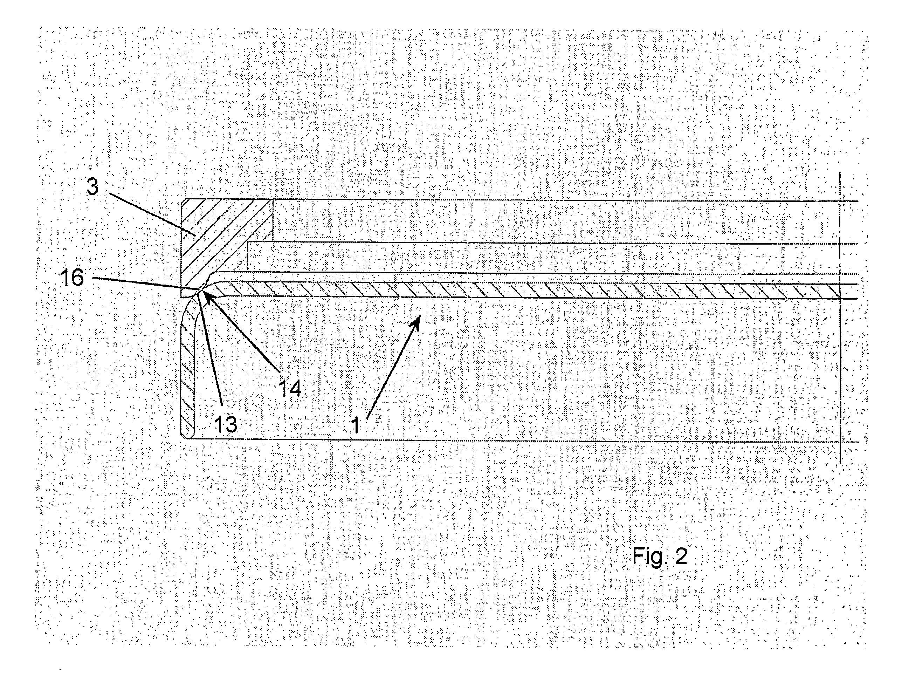

In Fig. 2 ist das Zusammenwirken von Haltesicke 13 und oberem Bördelwerkzeug 3 beim Bördeln dargestellt. Das obere Bördelwerkzeug 3 weist eine Halterille 16 auf, welche kreisbogenförmig ausgebildet und dem Radius 14 der Haltesicke 13 der Bördelplatte 1 angepasst ist und beim Bördeln genau in die Haltesicke 13 eingreift. Damit wird der bereits genannte Materialfluß verhindert.

### Bezugszcichenliste

- 1: Bördelplatte
- 2: unteres Bördelwerkzeug
- 3: oberes Bördelwerkzeug
- 4: nasenförmiger Ringansatz
- 5: fertig gebördelte Rollbalgluftfeder
- 6: Zarge der Bördelplatte 1
- 7: Wulst des Rollbalges 8
- 8: Rollbalg
- 9: Boden der Bördelplatte 1
- 10: scharfe Halterillen des oberen Bördelwerkzeuges 3
- 11: konvexer Bogen zwischen Zarge 6 und Boden 9
- 12: Radius des Bogens 11
- 13: Haltesicke
- 14: Radius der Haltesicke 13
- 15: Positionswinkel der Haltesicke 13
- 16: kreisbogenförmige Halterille des oberen Bördelwerkzeuges 3

## Patentansprüche

1. Verfahren zur Herstellung einer Rollbalgluftfeder (5) mit einem Rollbalg (8) und einer Bördelplatte (1) mit einer Zarge (6) und einem Boden (9), bei dem die Bördelplatte (1) in ein unteres Werkzeug eingelegt wird, ein oberes Bördelwerkzeug (3) die Bördelplatte (1) in das untere Bördelwerkzeug (2) presst, wobei die Zarge (6) der Bördelplatte (1) in eine Thorusform umgeformt wird und die Zarge (6) der Bördelplatte (1) dabei einen Wulst (7) des Rollbalges (8) sukzessive umfasst,
**gekennzeichnet dadurch, dass**
- an die Bördelplatte (1) mindestens eine ringförmige, geschlossene, konkave, kreisbogenförmig abgerundete Haltesicke (13) mit einer Tiefe kleiner als die Dicke der Bördelplatte (1) angeformt wird, die auf der der Öffnung der Bördelplatte (1) abgewandten Außenseite im Bereich des die Zarge (6) mit dem Boden (9) verbindenden konvexen Bogens (11) in einem vollen Umlauf um den gesamten Umfang der Bördelplatte (1) angeordnet wird,
- die Bördelplatte (1) anschließend mit einer Korrosionsschutzschicht beschichtet wird,
- an dem oberen Bördelwerkzeug (3) mindestens eine mit der mindestens einen konkaven Haltesicke (13) der Bördelplatte (1) korrespondierende kreisbogenförmig abgerundete konvexe Halterille (16) angebracht wird,
- beim Bördelvorgang durch Niederpressen der Bördelplatte (1) durch das obere Bördelwerkzeug (3) die mindestens eine konkave Haltesicke (13) der Bördelplatte (1) mit der mindestens einen konvexen Halterille (16) des oberen Bördelwerkzeuges in Eingriff gebracht wird und
- die Zarge (6) der Bördelplatte (1) formschlüssig in die Thorusform umgeformt wird.

2. Vorrichtung mit einem oberen Bördelwerkzeug (3) zur Durchführung des Verfahrens nach Anspruch 1, **gekennzeichnet dadurch, dass** das obere Bördelwerkzeug (3) mindestens eine mit der mindestens einen konkaven Haltesicke (13) der Bördelplatte (1) korrespondierende kreisbogenförmig abgerundete konvexe Halterille (16) aufweist, die beim Bördelvorgang durch Niederpressen der Bördelplatte (1) durch das obere Bördelwerkzeug (3) mit der mindestens einen konkaven Haltesicke (13) der Bördelplatte (1) in Eingriff bringbar ist.

3. Vorrichtung nach Anspruch 2, **gekennzeichnet dadurch, dass** der Querschnitt der mindestens einen ringförmigen konvexen Halterille (16) des oberen Bördelwerkzeuges (3) einen kreisbogenförmigen Querschnitt mit einem Radius des Kreisbogens zwischen 2mm und 30mm aufweist.

4. Vorrichtung nach Anspruch 2, **gekennzeichnet dadurch, dass** die konvexe Halterille (16) des oberen Bördelwerkzeuges (3) unter einem Winkel (15) zwischen 15° und 85° zur Waagerechten angeordnet ist.

5. Bördelplatte (1) mit einer Zarge (6) und einem Boden (9) für eine Rollbalgluftfeder (5), **gekennzeichnet dadurch, dass** die Bördelplatte (1) mindestens eine vor dem Aufbringen einer Korrosionsschutzschicht und vor dem Bördeln angeformte ringförmige, geschlossene, konkave Haltesicke (13) mit einer Tiefe kleiner als die Dicke der Bördelplatte (1) aufweist, die auf der der Öffnung der Bördelplatte (1) abgewandten Außenseite im Bereich des die Zarge (6) mit dem Boden (9) verbindenden konvexen Bogens (11) in einem vollen Umlauf um den gesamten Umfang der Bördelplatte (1) angeordnet ist.

6. Bördelplatte (1) nach Anspruch 5, **gekennzeichnet dadurch, dass** der Querschnitt der mindestens einen ringförmigen konkaven Haltesicke (13) einen kreisbogeriförmigen Querschnitt aufweist, wobei der Radius (12) des Kreisbogens zwischen 2mm und 30mm liegt.

7. Bördelplatte (1) nach Anspruch 5, **gekennzeichnet dadurch, dass** die konkave Haltesicke (13) im Bereich des Bogens (11) unter einem Winkel zwischen 15° und 85° zum ebenen Boden (9) der Bördelplatte (1) angeordnet ist.

8. Rollbalgluftfeder (5), **dadurch gekennzeichnet, dass** die Rollbalgluftfeder (5) eine Bördelplatte (1) nach Anspruch 5 aufweist.

9. Rollbalgluftfeder (5) nach Anspruch 8, **gekennzeichnet dadurch, dass** der Querschnitt der mindestens einen ringförmigen konkaven Haltesicke (13) der Bördelplatte (1) der Rollbalgluftfeder (5) einen kreisbogenförmigen Querschnitt mit einem Radius (12) des Kreisbogens zwischen 2mm und 30mm aufweist.

10. Rollbalgluftfeder (5) nach Anspruch 8, **gekennzeichnet dadurch, dass** die konkave Haltesicke (13) der Bördelplatte (1) der Rollbalgluftfeder (5) im Bereich des Bogens (11) unter einem Winkel zwischen 15° und 85° zum ebenen Boden (9) der Bördelplatte (1) angeordnet ist.

## Claims

1. Method for producing a rolling lobe air spring (5) having a rolling lobe (8) and a flanged plate (1) with a border (6) and a base (9), in which method the flanged plate (1) is placed in a lower tool, an upper flanging tool (3) presses the flanged plate (1) into the lower flanging tool (2), the border (6) of the flanged plate (1) being formed into a toroidal shape, and the border (6) of the flanged plate (1) thereby gradually encloses a bead (7) of the rolling lobe (8), **characterized in that**
- at least one annular, closed, concave, arcuately rounded holding bead (13) with a depth less than the thickness of the flanged plate (1) is formed onto the flanged plate (1), and is arranged on the outer side facing away from the opening in the flanged plate (1) in the region of the convex arc (11) joining the border (6) to the base (9) all the way around the entire periphery of the flanged plate (1),
- the flanged plate (1) is subsequently coated with an anticorrosive layer,
- at least one arcuately rounded convex holding groove (16), corresponding to the at least one concave holding bead (13) of the flanged plate (1), is provided on the upper flanging tool (3),
- the at least one concave holding bead (13) of the flanged plate (1) is brought into engagement with the at least one convex holding groove (16) of the upper flanging tool in the flanging operation by pressing down of the flanged plate (1) by the upper flanging tool (3), and
- the border (6) of the flanged plate (1) is positively formed into the toroidal shape.

2. Device having an upper flanging tool (3) for carrying out the method according to Claim 1, **characterized in that** the upper flanging tool (3) has at least one arcuately rounded convex holding groove (16), which corresponds to the at least one concave holding bead (13) of the flanged plate (1) and can be brought into engagement with the at least one concave holding bead (13) of the flanged plate (1) in the flanging operation by pressing down of the flanged plate (1) by the upper flanging tool (3).

3. Device according to Claim 2, **characterized in that** the cross section of the at least one annular convex holding groove (16) of the upper flanging tool (3) has an arcuate cross section with a radius of the circular arc of between 2 mm and 30 mm.

4. Device according to Claim 2, **characterized in that** the convex holding groove (16) of the upper flanging tool (3) is arranged at an angle (15) of between 15° and 85° to the horizontal.

5. Flanged plate (1) having a border (6) and a base (9) for a rolling lobe air spring (5), **characterized in that** the flanged plate (1) has at least one annular, closed, concave holding bead (13), which is formed on before the application of an anticorrosive layer and before the flanging, has a depth less than the thickness of the flanged plate (1) and is arranged on the outer side facing away from the opening in the flanged plate (1) in the region of the convex arc (11) joining the border (6) to the base (9) all the way around the entire periphery of the flanged plate (1).

6. Flanged plate (1) according to Claim 5, **characterized in that** the cross section of the at least one annular concave holding bead (13) has an arcuate cross section, the radius (12) of the circular arc lying between 2 mm and 30 mm.

7. Flanged plate (1) according to Claim 5, **characterized in that** the concave holding bead (13) in the region of the arc (11) is arranged at an angle of between 15° and 85° to the planar base (9) of the flanged plate (1).

8. Rolling lobe air spring (5) **characterized in that** the rolling lobe air spring (5) has a flanged plate (1) according to Claim 5.

9. Rolling lobe air spring (5) according to Claim 8, **characterized in that** the cross section of the at least one annular concave holding bead (13) of the flanged plate (1) of the rolling lobe air spring (5) has an arcuate cross section with a radius (12) of the circular arc of between 2 mm and 30 mm.

10. Rolling lobe air spring (5) according to Claim 8, **characterized in that** the concave holding bead (13) of the flanged plate (1) of the rolling lobe air spring (5) in the region of the arc (11) is arranged at an angle of between 15° and 85° to the planar base (9) of the flanged plate (1).

## Revendications

1. Procédé de fabrication d'un soufflet tubulaire amortisseur pneumatique (5) avec un soufflet tubulaire (8) et une plaque de sertissage (1) avec un cadre (6) et un fond (9), dans lequel la plaque de sertissage (1) est insérée dans un outil inférieur, un outil de sertissage supérieur (3) presse la plaque de sertissage (1) dans l'outil de sertissage inférieur (2), le cadre (6) de la plaque de sertissage (1) étant façonné en forme de tore, et le cadre (6) de la plaque de sertissage (1) entourant successivement ainsi un bourrelet (7) du soufflet tubulaire (8),
**caractérisé en ce que**
- sur la plaque de sertissage (1) est façonnée au moins une moulure de retenue (13) de forme annulaire, fermée, concave, arrondie en forme d'arc de cercle, ayant une profondeur inférieure à l'épaisseur de la plaque de sertissage (1), qui est disposée du côté extérieur opposé à l'ouverture de la plaque de sertissage (1) dans la région de l'arc convexe reliant le cadre (6) au fond (9) tout autour de la périphérie de la plaque de sertissage (1),
- la plaque de sertissage (1) est ensuite revêtue d'une couche de protection contre la corrosion,
- au moins une gorge de retenue (16) convexe arrondie en forme d'arc de cercle correspondant à l'au moins une moulure de retenue concave (13) de la plaque de sertissage (1) est montée sur l'outil de sertissage supérieur (3),
- lors de l'opération de sertissage par pression vers le bas de la plaque de sertissage (1) par l'outil de sertissage supérieur (3), l'au moins une moulure de retenue concave (13) de la plaque de sertissage (1) est amenée en prise avec l'au moins une gorge de retenue convexe (16) de l'outil de sertissage supérieur et
- le cadre (6) de la plaque de sertissage (1) est façonné par engagement par correspondance géométrique dans le tore.

2. Dispositif comprenant un outil de sertissage supérieur (3) pour mettre en oeuvre le procédé selon la revendication 1, **caractérisé en ce que** l'outil de sertissage supérieur (3) présente au moins une gorge de retenue (16) convexe arrondie en forme d'arc de cercle correspondant à l'au moins une moulure de retenue concave (13) de la plaque de sertissage (1), laquelle peut être amenée en prise avec l'au moins une moulure de retenue concave (13) de la plaque de sertissage (1) lors de l'opération de sertissage par pression vers le bas de la plaque de sertissage (1) par l'outil de sertissage supérieur (3).

3. Dispositif selon la revendication 2, **caractérisé en ce que** la section transversale de l'au moins une gorge de retenue (16) convexe de forme annulaire de l'outil de sertissage supérieur (3) présente une section transversale en forme d'arc de cercle ayant un rayon d'arc de cercle compris entre 2 mm et 30 mm.

4. Dispositif selon la revendication 2, **caractérisé en ce que** la gorge de retenue convexe (16) de l'outil de sertissage supérieur (3) est disposée suivant un angle (15) compris entre 15° et 85° par rapport à l'horizontale.

5. Plaque de sertissage (1) comprenant un cadre (6) et un fond (9) pour un soufflet tubulaire amortisseur pneumatique (5), **caractérisée en ce que** la plaque de sertissage (1) présente au moins une moulure de retenue concave (13) fermée, de forme annulaire, façonnée avant l'application d'une couche de protection contre la corrosion et avant le sertissage, ayant une profondeur qui est inférieure à l'épaisseur de la plaque de sertissage (1), qui est disposée du côté extérieur opposé à l'ouverture de la plaque de sertissage (1) dans la région de l'arc convexe (11) reliant le cadre (6) au fond (9), tout autour de la périphérie de la plaque de sertissage (1).

6. Plaque de sertissage (1) selon la revendication 5, **caractérisée en ce que** la section transversale de l'au moins une moulure de retenue concave de forme annulaire (13) présente une section transversale en forme d'arc de cercle, le rayon (12) de l'arc de cercle étant compris entre 2 mm et 30 mm.

7. Plaque de sertissage (1) selon la revendication 5, **caractérisée en ce que** la moulure de retenue concave (13) est disposée dans la région de l'arc (11) suivant un angle compris entre 15° et 85° par rapport au fond plan (9) de la plaque de sertissage (1).

8. Soufflet tubulaire amortisseur pneumatique (5), **caractérisé en ce que** le soufflet tubulaire amortisseur pneumatique (5) présente une plaque de sertissage (1) selon la revendication 5.

9. Soufflet tubulaire amortisseur pneumatique (5) selon la revendication 8, **caractérisé en ce que** la section transversale de l'au moins une moulure de retenue concave annulaire (13) de la plaque de sertissage (1) du soufflet tubulaire amortisseur pneumatique (5) présente une section transversale en forme d'arc de cercle avec un rayon (12) de l'arc de cercle compris entre 2 mm et 30 mm.

10. Soufflet tubulaire amortisseur pneumatique (5) selon la revendication 8, **caractérisé en ce que** la moulure de retenue concave (13) de la plaque de sertissage (1) du soufflet tubulaire amortisseur pneumatique (5) est disposée dans la région de l'arc (11) suivant un angle compris entre 15° et 85° par rapport au fond plan (9) de la plaque de sertissage (1).
